# EUROPEAN PATENT APPLICATION

(11) **EP 4 574 347 A1**
(43) Date of publication of application: **25.06.2025**
(21) Application number: 22956591.6
(22) Date of filing: 20.09.2022
(51) Int. Cl.: B25J 9/16, B25J 5/00, B25J 19/02, B25J 13/08, B25J 13/00, G05D 1/20

(54) **MOBILE ROBOT AND OPERATION METHOD THEREOF**

(30) Priority: 25.08.2022 KR 20220106966
(71) Applicant: LG Electronics Inc., Yeongdeungpo-gu Seoul 07336 (KR)
(72) Inventor: KIM, Moonchan, Seoul 06772 (KR); LEE, Iljae, Seoul 06772 (KR); PARK, Mihyun, Seoul 06772 (KR); JANG, Dongseon, Seoul 06772 (KR)
(74) Representative: Schornack, Oliver
(86) International application number: PCT/KR2022/014056
(87) International publication number: WO 2024/043385

(57) **Abstract**

A mobile robot and an operation method of the mobile robot are disclosed. In the mobile robot according to the present invention, a technique related to the periodic removal of foreign matter smeared on casters is disclosed. To this end, while the mobile robot is driven using a wheel module including a plurality of drive wheels and casters, the mobile robot senses a neighboring mat area by using a sensor, in response to recognition that a caster care mode has been started, and moves so as to be on the recognized mat area, and performs a motion run set to remove contamination of the casters without leaving the mat area. Accordingly, during moving of the mobile robot, damage to floor surfaces, due to scratches or like caused by foreign matter smeared on the casters of the mobile robot, can be minimized.

## Description

### Technical field

The present disclosure relates to a mobile robot and a method for operating the same, and more particularly, to a guide robot that travels using a wheel module including a plurality of casters and a method for operating the same.

### Background Art

A mobile robot (moving robot) means a machine capable of autonomously traveling to carry out a given task by itself, and is being used in various fields. Recently, interest in mobile robots that provide services, such as guide robots providing various guide services to users, delivery robots delivering goods, and the like, have steadily increased.

According to Korean Patent Publication No. 10-2020-0085661 (Prior Art Document 1), as an example of a mobile robot, a mobile robot including drive wheels and casters is disclosed. Specifically, Prior Art Document 1 discloses that the mobile robot travels while the drive wheels rotate centering on a driving shaft by rotational force generated by a drive motor and the plurality of casters rotate together.

Meanwhile, when the mobile robot is used indoors, foreign substances such as dust are accumulated on the drive wheels and casters due to repeated traveling. Such foreign substances are often naturally eliminated from the drive wheels as rotational force generated by a drive motor is applied to the drive wheels, while much more foreign substances are accumulated on the casters.

The foreign substances stuck on the casters scratch, like sandpaper, a bottom surface (floor) on which the mobile robot travels, for example, a marble floor, and a marble wax layer and a stone surface are worn over time.

Therefore, it may be considered that a manager directly cleans the casters of the mobile robot, but the mobile robot must be turned over to clean the casters. However, it may be difficult due to a large size and a heavy weight depending on a type of mobile robot (particularly, a guide robot). There is also a difficulty in management when many mobile robots should be managed by the manager.

Therefore, a periodical replacement of casters may be considered. However, this increases management costs such as component replacement costs and personnel expenses for the replacement, and additional time is required for replacement and testing. Also, in some cases, the mobile robot may have a structure in which it is difficult to replace the casters.

### Disclosure of Invention

### Technical Problem

Thus, one aspect according to one embodiment of the present disclosure is to provide a mobile robot capable of removing foreign substances accumulated on casters by itself without replacing casters, and an operating method thereof.

Another aspect according to one embodiment of the present disclosure is to provide a mobile robot capable of determining a point of time for removing foreign substances accumulated on casters by itself and, if necessary, notifying a manager that caster cleaning is required, and an operating method therefor.

Still another aspect according to one embodiment of the present disclosure is to provide a mobile robot capable of self-modifying an operation for removing foreign substances from casters according to characteristics of an area where caster cleaning is to be performed, and an operating method therefor.

Still another aspect according to an embodiment of the present disclosure is to provide a mobile robot capable of performing an operation mode for removing foreign substances from casters by minimizing interference with a task being performed when there is a route set in the mobile robot or during the task, and an operating method therefor.

### Solution to Problem

A mobile robot according to an embodiment of the present disclosure may perform a caster management mode to prevent damage on a floor due to foreign substances stuck on casters while typically traveling. In the caster management mode, the mobile robot may detect a mat and move onto the mat to perform a predetermined motion on the mat for removing contaminants, thereby periodically removing the foreign substances stuck on the casters.

The mobile robot according to the present disclosure may perform a motion for removing the foreign substances stuck on the casters by appropriately varying the motion according to characteristics of the mat, such as shape, size, location, and the like of the mat.

The mobile robot according to the present disclosure may notify a control center, start the caster management mode, and determine an operation time of the caster management mode based on a detection result of a sensor that is capable of detecting caster contamination.

Specifically, a mobile robot according to the present disclosure may include a travel unit configured to allow the mobile robot to travel using a wheel module including a plurality of drive wheels and casters, a sensing unit configured to allow the mobile robot to detect a mat area, and a control unit electrically connected to the travel unit and the sensing unit. The control unit may generate a control signal for detecting the mat area in response to recognizing that a caster management mode has started, control the travel unit such that the mobile robot is located on the mat area recognized based on the control signal, and control the travel unit such that the mobile robot performs motion driving for removing contaminants on the casters without departing from the mat area.

In an embodiment, the wheel module may be mounted on a bottom plate of the mobile robot. The casters include front casters disposed on the front of a lower surface of the bottom plate and rear casters disposed on the rear of the lower surface, and the control unit may check whether the front casters and the rear casters are all in contact with a floor of the mat area, in response to the mobile robot being seated on the mat area, and then starts the motion driving.

In an embodiment, the control unit may keep monitoring whether the front casters and the rear casters are located within the mat area through the sensing unit during the motion driving, and vary the motion driving based on a result of the monitoring.

In an embodiment, the motion driving may include at least one of an in-situ rotational motion and a repeated forward and reverse driving motion of the mobile robot in a state that the mobile robot does not depart from the mat area, and the control unit may provide rotational force to the plurality of drive wheels such that the plurality of drive wheels alternately rotate forward and reverse.

In an embodiment, the control unit may differently determine specific driving of the motion driving based on information related to the mat area, and the information may include at least one of shape, size, location, and area ratio of the mat area.

In an embodiment, the mobile robot may further include contamination detection sensors mounted near the casters to detect contaminants on the casters, and the control unit may generate a signal for starting the caster management mode based on a detection result of the contamination detection sensors.

In an embodiment, the mobile robot may further include a communication unit configured to transmit a wireless signal to a control server, in response to the detection of the contaminants on the casters as the detection result, and the control unit may generate a signal for starting the caster management mode when an execution response corresponding to the wireless signal is received from a manager terminal to the communication unit through the control server.

In an embodiment, the control unit may vary an execution time of the motion driving according to the detection result of the contamination detection sensor in the caster management mode.

In an embodiment, the control unit may end the caster management mode based on the detection result of the contamination detection sensor, and control the mobile robot to perform a stored next operation mode by moving to a position located before the caster management mode starts.

In an embodiment, the control unit may control the travel unit such that the mobile robot to move to a charging station when a charging signal is generated, and generate a control signal for recognizing the mat area, in response to the mobile robot approaching the charging station within a reference distance.

In an embodiment, the control unit may change a set route to include the mat area when a preset condition is satisfied while the mobile robot travels along the set route, and control the mobile robot to perform the motion driving when the mobile robot enters the mat area within the route.

In an embodiment, the preset condition may be one of when the mobile robot arrives at a specific point of interest (POI) within the set route, when an accumulated driving distance of the mobile robot exceeds a threshold distance, when the mobile robot completes a predetermined driving mode, and when a selection signal to add the mat area located near the mobile robot to the route is received.

A method for operating a mobile robot that travels using a wheel module including a plurality of drive wheels and a plurality of casters may include recognizing, by a control unit of the mobile robot, that a caster management mode has been started, detecting a mat area using a sensor of the mobile robot, allowing the mobile robot to travel to be located on the detected mat area, and performing motion driving to remove contaminants on the casters while the mobile robot does not depart from the mat area.

In an embodiment, the method for operating the mobile robot may further include checking whether the plurality of casters are all in contact with a floor of the mat area, in response to the mobile robot being seated on the mat area, and the performing the motion driving may include continuously monitoring whether the plurality of casters are located in the mat area during the motion driving, and varying the motion driving based on a result of the monitoring.

In an embodiment, the performing the motion driving may be a step of performing at least one of an in-situ rotational motion and a repeated forward and reverse driving motion of the mobile robot in a state that the mobile robot does not depart from the mat area, and may include providing rotational force to the plurality of drive wheels so that each of the plurality of drive wheels alternately rotates in a forward direction and a reverse direction.

In an embodiment, the performing the motion driving may further include differently determining specific driving of the motion driving based on information related to the mat area, and the information may include at least one of shape, size, location, and area ratio of the mat area.

In an embodiment, the method for operating the mobile robot may further include detecting contaminants on the casters by sensors mounted near the casters, and generating a signal for starting the caster management mode based on detection results of the sensors.

In an embodiment, the method for operating the mobile robot may further include varying an execution time of the motion driving according to the detection results of the contaminants through the sensors, in the caster management mode.

### Advantageous Effects of Invention

In a mobile robot and an operating method thereof according to some embodiments of the present disclosure, the mobile robot can remove foreign substances accumulated on casters by itself without replacing the casters. This can prevent in advance an occurrence of scratches, wear or damage on a floor, on which the mobile robot travels, due to contaminants on the casters of the mobile robot.

The casters can be cleaned periodically, which can extend a caster replacement cycle and minimize a risk due to the contaminants on the casters of the mobile robot when the floor is made of a high-quality material or under an environment in which cleanliness is emphasized.

A time point for removing foreign substances accumulated on the casters can be determined by detecting a degree of contamination of the casters, and if necessary, a manager can be informed that caster cleaning is required, so as to perform a caster management mode, thereby more efficiently performing caster management.

The mobile robot can select and perform appropriate motion driving for each characteristic of a mat area on which the casters are to be decontaminated, monitor whether all the casters are in contact with a floor before motion driving, and keep monitoring whether or not the mobile robot departs from the mat area during motion driving. This can prevent the floor, on which the mobile robot travels, from being damaged due to unintentional departure of the mobile robot from the mat area.

### Brief Description of Drawings

FIG. 1 is a view illustrating an embodiment of a mobile robot in accordance with the present disclosure.
FIG. 2 is a block diagram illustrating an exemplary configuration of a mobile robot in accordance with the present disclosure.
FIGS. 3A and 3B are partial views illustrating a portion related to a plurality of casters in a mobile robot according to the present disclosure.
FIG. 4 is a flowchart illustrating a method of operating a mobile robot in accordance with an embodiment of the present disclosure.
FIG. 5 is an exemplary view for explaining a method in which a mobile robot recognizes a mat area according to an embodiment of the present disclosure.
FIG. 6 is an exemplary diagram illustrating a motion of a mobile robot to decontaminate casters in a mat area in accordance with an embodiment of the present disclosure.
FIG. 7 is an exemplary view for explaining a confirmation operation before a mobile robot performs motion driving of a caster management mode according to an embodiment of the present disclosure, and FIGS. 8A, 8B, 8C, and 8D are different exemplary views for explaining specific driving of motion driving related to characteristics of a mat area.
FIG. 9 is a view illustrating an example of a contamination detection sensor mounted on a mobile robot according to an embodiment of the present disclosure, and FIG. 10 is an exemplary view for explaining a method of starting a caster management mode by transmitting a contamination detection result to a remote manager terminal through a control server.
FIGS. 11A and 11B are views for explaining different examples in which a mobile robot performs a caster management mode when a specific condition is satisfied while traveling along a set route.
FIG. 12 is an exemplary view illustrating a setting screen for a mobile robot to input details of a caster management mode through a user terminal according to an embodiment of the present disclosure.

### Mode for the Invention

Hereinafter, embodiments disclosed herein will be described in detail with reference to the accompanying drawings, and the same or similar elements are designated with the same numeral references, regardless of the numerals in the drawings, and their redundant description will be omitted. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known technology or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

On the other hand, a "mobile robot" disclosed herein refers to a machine capable of performing a predetermined task or mission while traveling autonomously. Mobile robots, for example, may include guide robots that are capable of providing users with a variety of information such as welcome greetings, road guidance, product guidance, product search, parking guidance, airport information, docent information, library information, etc. in various public places, e.g., shopping malls like department stores, accommodations like hotels, cultural spaces like art galleries and libraries, and the like, cleaning robots that perform cleaning operations in designated spaces, delivery robots that deliver goods to a designated destinations, and the like.

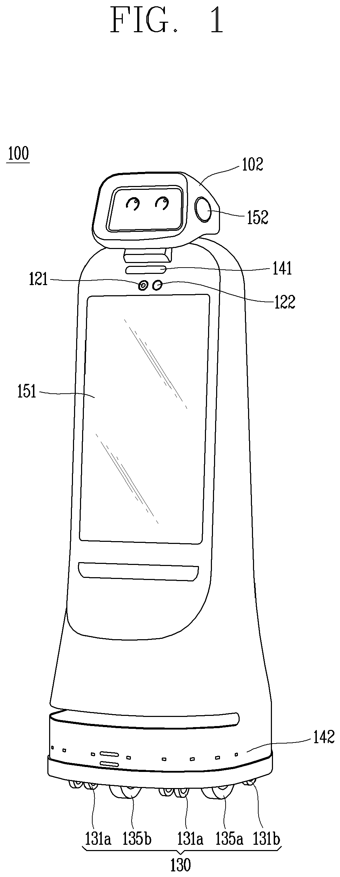

FIG. 1 is a view illustrating an embodiment of a mobile robot 100 in accordance with the present disclosure.

The mobile robot 100 illustrated in FIG. 1 is illustrated as a guide robot for convenience of explanation, but may not be limited thereto. In other words, the mobile robot 100 related to the present disclosure may include any type of robot capable of traveling by itself using a wheel module that includes drive wheels and casters.

Referring to FIG. 1, a mobile robot 100 according to the present disclosure may include a head part (or head) 102, a camera 121, a speaker 152, a voice recognition unit (not illustrated), a touch screen 151, and a travel unit 130. However, in some cases, the mobile robot 100 according to the present disclosure may be implemented by excluding some of those components described herein or further including other components.

Appearance of the mobile robot 100 according to the present disclosure may be defined by an upper module including the head part 102 and the touch screen 151 and a lower module including the travel unit 130. The upper module and the lower module may be detachable from each other.

The upper module provides a user interface that can be changed according to a service environment. The lower module provides a traveling function for moving a main body of the guide robot.

The upper module may be divided into a body part defining a body and having the touch screen 151, and the head part 102 having the camera 121 and the like. However, in some cases, a camera may be provided on the body part or a touch screen may be disposed on the head part 102.

The camera 121 may be provided on one side of a case of the head part 102 or on one side of a case of the body part. In addition, the camera 121 may be provided in plurality. In this case, one camera may be provided on a front surface of the main body so as to face the front, and another camera may be provided on a side surface or a rear surface so as to face the side/rear. Accordingly, an angle of view covering 360 degrees can be formed.

When the camera 121 is provided in plurality, a first camera may include, for example, a 3D stereo camera. The 3D stereo camera may perform obstacle detection, user face recognition, stereoscopic image acquisition, and the like. The mobile robot 100 may detect and avoid an obstacle existing in its moving direction and perform various control operations by recognizing a user, by using the first camera. In addition, the second camera may include, for example, a Simultaneous Localization And Mapping (SLAM) camera. The SLAM camera performs a function of tracking the current location of the camera through feature point matching and creates a 3D map based on the tracking result. The mobile robot 100 may recognize its current position using the second camera.

In addition, the camera 121 may recognize an object in a viewing angle range and perform a function of photographing a still image and a moving image of the object. In relation to this, the camera 121 may include at least one of a camera sensor (e.g., CCD, CMOS, etc.), a photo sensor (or image sensor), and a laser sensor. The camera 121 and the laser sensor may be combined to detect a touch of an object to be sensed (detected), with respect to a 3D stereoscopic image. The photo sensor may be stacked on a display element, and configured to scan a motion of an object to be sensed, closely approaching a touch screen. In more detail, the photo sensor may include photo diodes and transistors (TRs) at rows and columns to scan content received at the photo sensor using an electrical signal which changes according to the quantity of applied light. That is, the photo sensor may perform coordinates calculation of an object to be sensed according to a change in an amount of light, and acquire position information regarding the object to be sensed based on the coordinates.

In addition, the camera 121 may discriminate and recognize a material of an object within a viewing angle range. For example, the camera 121 may recognize a material of a floor (bottom surface) on which the mobile robot 100 travels, a change in the material of the floor, and a location where the change in the material of the floor starts/ends, within a viewing angle range.

The sound output module 152 may perform a function of notifying information to be provided to the user by voice, and may be, for example, in the form of a speaker. Specifically, a response or search result corresponding to a user's voice, which is received through a sound reception module 122 and a voice recognition unit (not illustrated) provided in the mobile robot 100, is output by voice through the sound output module 152. The sound output module 152 may be disposed on an outer circumferential (peripheral) surface of the head portion 102 or the body portion having the touch screen 151. Also, the sound output module 152 may output voice information related to a screen (e.g., a menu screen, an advertisement screen, etc.) displayed on the touch screen 151.

A sound reception module 122 performs a function of receiving a user's voice, etc., and may be, for example, in the form of a microphone. The sound reception module 122 may process an external sound signal into electrical voice data, and implement various noise removal algorithms to remove noise generated in the course of receiving the external sound signal.

The touch screen 151 may be located longitudinally in one direction of the body part and may display a screen for providing visual information, for example, guidance information. The touch screen 151 may include a display module, a touch sensor, and a pressure sensor.

The touch screen 151 may be coupled to, for example, a movement guide element, so as to open and close an inside of the body part. The touch screen 151 may be fixed coupled to the body part using a fixing member, for example.

In addition, although not illustrated in detail, the touch screen 151 may be provided on the rear with respect to the head part 102 or provided on the rear as well as the front, considering that the mobile robot 100 is linearly moving along a preset path for guiding the user. Alternatively, the head part 102 may be rotated by 180 degrees before the mobile robot 100 linearly moves along a preset route (path), so as to change the appearance as if the touch screen 151 is located on the rear.

In this case, the touch screen 151 performs a function of outputting visual information (e.g., route (path) guidance information, query information) related to a currently-provided service. The user can see the touch screen 151 installed on the rear of the mobile robot 100 while following the mobile robot 100.

In addition, the touch screen 151 may be provided on each of both the front and rear surfaces of the main body. In this case, different screens may be displayed on a first touch screen disposed on the front surface of the main body and a second touch screen disposed on the rear surface of the main body (e.g., a screen for interacting with the user on the first touch screen, an advertisement screen on the second touch screen). In addition, a display unit for outputting variations in facial expression of the mobile robot may be provided on the front surface of the head part 102.

The travel unit 130 performs movement and rotation of the body part of the mobile robot 100. To this end, the travel unit 130 may include a plurality of drive wheels 135a and 135b, a drive motor, and a plurality of casters 131a and 131b. The operation of the travel unit 130 is controlled according to a control command received by a control unit, and a notification may be provided through an output element such as an LED before and after the travel unit 130 is operated.

The travel unit 130 may allow the mobile robot 100 to travel as the plurality of drive wheels 135a and 135b receive rotational force from the drive motor in a state where the plurality of casters 131a and 131b are in uniform contact with the ground.

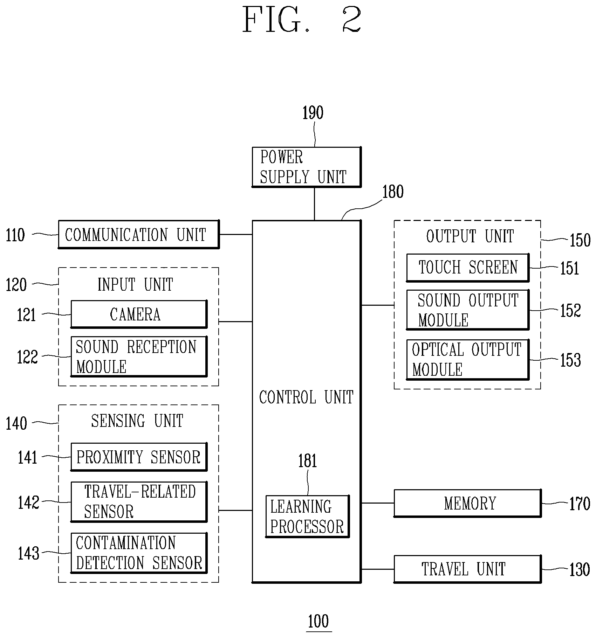

FIG. 2 is a block diagram illustrating an exemplary configuration of the mobile robot in accordance with the present disclosure.

The mobile robot 100 may include a communication unit 110, an input unit 120, a travel unit 130, a sensing unit 140, an output unit 150, a memory 170, a control unit 180, a power supply unit 190, and the like. Those components illustrated in FIG. 2 are not essential for implementing the mobile robot, and the mobile robot described in this specification may be provided with more or less components than the components listed above.

The communication unit 110 may include at least one module for enabling wireless communication between the mobile robot 100 and an external server, for example, an artificial intelligence server or an external terminal. In addition, the communication unit 110 may include at least one module through which the mobile robot 100 is connected to at least one network.

The communication unit 110 may perform communications with an artificial intelligence (AI) server and the like by using wireless Internet communication technologies, such as Wireless LAN (WLAN), Wireless Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), Long Term Evolution-Advanced (LTE-A), and the like. The communication unit 110 may also perform communications with an external terminal and the like by using short-range communication technologies, such as Bluetooth ^{™}, Radio Frequency Identification (RFID), Infrared Data Association (IrDA), Ultra Wideband (UWB), ZigBee, Near Field Communication (NFC), and the like.

The input unit 120 may include a camera 121 or an image input module for inputting an image (video) signal, a sound reception module 122 for inputting a sound (audio) signal, for example, a microphone, a user input unit (not illustrated, for example, a touch key, a mechanical key, etc.), and the like. The signal data, voice data, and image data collected by the input unit 120 may be analyzed and processed as a control command.

The travel unit 130 performs movement and rotation of the body part of the mobile robot 100. To this end, the travel unit 130 may include a plurality of drive wheels, a drive motor, and a plurality of casters. The operation of the travel unit 130 may be controlled according to a control command received by the control unit 180, and a notification may be output through an optical output module 153 such as an LED before and after the travel unit 130 is operated.

The sensing unit 140 may include at least one sensor for sensing at least one of internal information related to the mobile robot, surrounding environment information of the mobile robot, and user information. For example, the sensing unit 140 may include a proximity sensor 141, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone, a battery gauge, an environment sensor (for example, a barometer, a hygrometer, a thermometer, a radiation detection sensor, a thermal sensor, and a gas sensor, among others), a chemical sensor (for example, an electronic nose, a health care sensor, a biometric sensor, and the like), and the like. Meanwhile, the guide robot disclosed herein may combine and use information sensed by at least two of those sensors.

In addition, the sensing unit 140 may include a travel-related sensor 142 that detects an obstacle, a floor state, and the like.

In addition, the sensing unit 140 may include a contamination detection sensor 143 for detecting foreign substances stuck on the plurality of casters or drive wheels of the travel unit 130. The contamination detection sensor 143 may be, for example, one of a camera, an IR sensor, and other vision sensors mounted around portions where detailed components of the travel unit 130 are installed in a distributing manner.

Examples of the proximity sensor 141 may include a transmission type photoelectric sensor, a direct reflection type photoelectric sensor, a mirror reflection type photoelectric sensor, a high frequency oscillation type proximity sensor, a capacitive proximity sensor, a magnetic proximity sensor, an infrared proximity sensor, and the like. Also, the proximity sensor 141 may include at least one of a navigator camera, an ultrasonic sensor, a LiDAR, and a ToF sensor, and may be configured to recognize approach and location of an object to be sensed, i.e., a sensing target (e.g., a user).

The output unit 150 may generate an output related to visual information, auditory information, tactile information, or the like and may include at least one of the touch screen 151, the sound output module 152, and an optical output module 153. The touch screen 151 may be interlayered or integrally formed with the touch sensor so as to realize a touch screen. The touch screen may function as a user input unit for providing an input interface between the mobile robot 100 and the user and simultaneously provide an output interface between the mobile robot 100 and the user.

The optical output module 153 outputs a signal for notifying an occurrence of an event of the mobile robot 100 using light emitted from a light source. For example, when a movement command is transmitted to the travel unit 130 of the mobile robot 100, a signal for notifying the movement is output through the optical output module 153.

The control unit 180 may include a learning processor 181 to perform an operation related to an artificial intelligence technology of the mobile robot.

The learning processor 181 may learn one or more artificial neural network-based models using learning data. The learning processor 181 may be configured to receive, classify, store, and output information to be used for data mining, data analysis, intelligent decision, and machine learning algorithms and technologies. The learning processor 181 may include at least one memory unit configured to store information, which is received, detected, sensed, generated, or predefined through the mobile robot or information output through the mobile robot in different manners, or to store data which is received, detected, sensed, generated, predefined or output through other components, devices and terminals.

The learning processor 181 may be integrally provided in the mobile robot or may include a memory. In one embodiment, the learning processor 181 may be implemented by the memory 170. However, the present disclosure is not limited to this. Alternatively, the learning processor 181 may be implemented in an external memory associated with the mobile robot 100, or may be implemented by a memory included in a server that can communicate with the mobile robot 100. In another embodiment, the learning processor 181 may be implemented by a memory which is maintained in a cloud computing environment, or by another remote controllable memory which is accessible by the guide robot through a communication method such as network communication.

The learning processor 181 is generally configured to store data, which is to be used in supervised or unsupervised learning, data mining, predictive analysis or other machine learning technologies, in at least one database so as to identify, index, classify, manipulate, store, search for and output the data. Information stored in the learning data unit may be used by the control unit 180, which uses at least one of different types of data analysis, machine learning algorithms, and machine learning technologies, or by a plurality of control units (processors) included in the guide robot. Examples of such algorithms and technologies may include K-nearest neighbor systems, fuzzy logic (for example, possibility theory), neural networks, Boltzmann machines, vector quantization, pulsed neural nets, support vector machines, maximum margin classifiers, hill-climbing, inductive logic systems, Baysian networks, Petri nets (e.g., finite state machines, Mealy machines, Moore finite state machines, etc.), classifier trees (e.g., perceptron trees, support vector trees, Markov trees, decision tree forests, random forests, etc.), pandemonium models and systems, clustering, artificially intelligent planning, artificially intelligent forecasting, data fusion, sensor fusion, image fusion, reinforcement learning, augmented reality, pattern recognition, automated planning, and the like.

The control unit 180 may determine or predict executable operations of the guide robot based on information decided or generated using data analysis, machine learning algorithms, and machine learning technologies. For this, the control unit 180 may request, search, receive, or utilize data of the learning processor 181. The control unit 180 may perform various functions for implementing a knowledge-based system, an inference system, a knowledge acquisition system, and the like, and may perform various functions including a system (e.g., a fuzzy logic system) for fuzzy inference, an artificial neural system, and the like.

The control unit 180 may also include sub modules, such as an I/O processing module, an environmental condition module, a speech-to-text (STT) processing module, a natural language processing module, a task flow processing module, a service processing module, and the like, which enable voice and natural language processing. Each of the sub modules may have access authority for at least one system or data and model, or its subset or superset in the mobile robot. Here, subjects for which each of the sub modules has the access authority may include scheduling, a vocabulary index, user data, a task flow model, a service model, and an automatic speech recognition (ASR) system.

In some embodiments, on the basis of the data in the learning processor 181, the control unit 180 may also be configured to detect and sense user's requirements, based on contextual conditions or user's intent represented by a user input or a natural language input. When an operation of the mobile robot is decided based on the data analysis, the machine learning algorithm, and the machine learning technology performed by the learning processor 181, the control unit 180 may control components of the mobile robot to execute the decided operation. The control unit 180 may execute the decided operation by controlling the mobile robot on the basis of a control command.

The memory 170 stores data supporting various functions of the mobile robot 100. The memory 170 may store a plurality of application programs (or applications) driven in the mobile robot 100, data for operations of the mobile robot 100, and command words. In addition, the memory 170 may store a variable customized wake-up word for performing a voice conversation function with the user.

The memory 170, for example, may include one or more types of storage mediums including a flash memory type, a hard disk type, a solid state disk (SSD) type, a silicon disk drive (SDD) type, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like.

The control unit 180 typically controls the overall operation of the mobile robot 100, in addition to the operations related to the application programs. The control unit 180 may provide to the user or process appropriate information or functions by processing signals, data, information, etc. input or output through the above-mentioned components, by activating application programs stored in the memory 170, or by controlling the travel unit 130.

Under the control of the control unit 180, the power supply unit 190 receives external power or internal power and supplies such power to the respective components included in the mobile robot 100. The power supply unit 190 may include a battery, which may be an internal battery or a replaceable battery.

At least some of the respective components may cooperatively operate to implement operations, controls or control methods of the guide robot in accordance with various embodiments described below. In addition, the operations, controls, or control methods of the guide robot may be implemented on the guide robot by running at least one application program stored in the memory 170.

Various embodiments described below may be implemented in a medium readable by a computer or similar devices using, for example, software, hardware, or a combination thereof.

Meanwhile, the mobile robot 100 according to the present disclosure performs traveling using a plurality of drive wheels, a drive motor, and a plurality of casters.

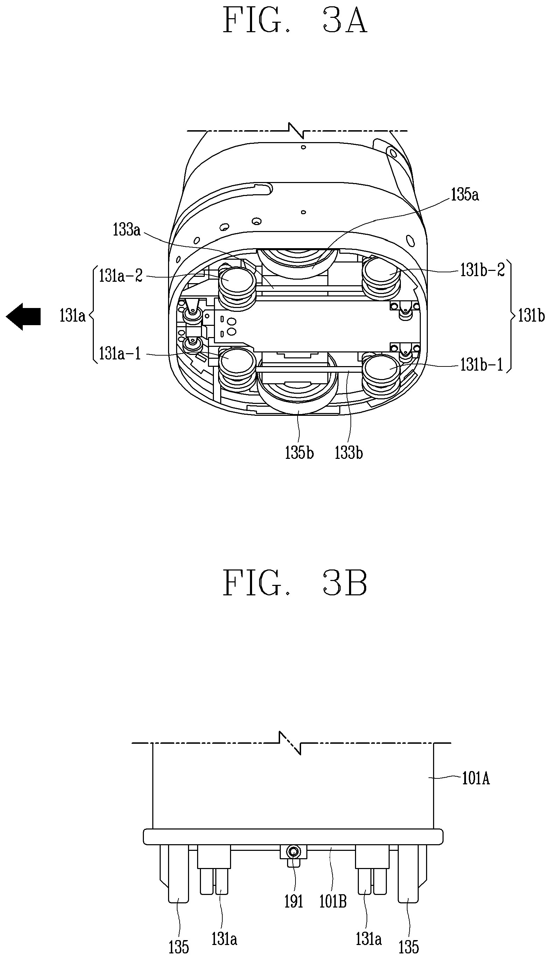

FIGS. 3A and 3B are partial views illustrating portions related to a plurality of casters 131a and 131b included in a travel unit 130 of a mobile robot related to the present disclosure.

Referring to FIGS. 3A and 3B, the travel unit 130 of the mobile robot 100 allows the mobile robot 100 to travel using a wheel module that includes the drive wheels 135a and 135b and the casters 131a and 131b.

The wheel module may be provided in plurality mounted on a bottom plate 101B of the mobile robot 100. In this case, the plurality of wheel modules may include a left wheel module provided on a left side and a right wheel module provided on a right side based on a traveling direction of the mobile robot. The left wheel module and the right wheel module may be installed on the bottom plate 101B to be symmetrical with and spaced apart from each other in a left-right direction. Hereinafter, the wheel module may be used as including both of the left wheel module and the right wheel module.

The wheel module may include a plurality of drive wheels 135a and 135b, a plurality of casters 131a and 131b, a plurality of link arms 133a and 133b, a guide pin, a hinge part, and a drive motor.

Each of the plurality of drive wheels 135a and 135b may rotate by receiving rotational force from the driving motor, thereby allowing the mobile robot 100 to move. Each of the plurality of drive wheels 135a and 135b may be connected to a rotational shaft of the drive motor or to a reduction gear connected to the rotational shaft of the drive motor.

Each of the plurality of link arms 133a and 133b may have a structure in which a link motor arm and a link back arm are interlocked. The plurality of drive wheels 135a and 135b and the plurality of casters 131a and 131b may be distributed to the plurality of link arms 133a and 133b. Each of the link motor arm and the link back arm may be disposed horizontally.

Each of the plurality of casters 131a and 131b may include a front caster 131a and a rear caster 131b. Each of the front caster 131a and the rear caster 131b may be provided in plurality, for example, two in number.

The front caster 131a may be installed on a front portion of each link motor arm of the plurality of link arms 133a and 133b. The rear caster 131b may be installed on a rear portion of each link back arm of the plurality of link arms 133a and 133b.

Each of the front casters 131a may include a caster body and a front wheel. In this case, the caster body may be disposed on the front portion of each link motor arm and may include a vertical shaft installed at each link motor arm. Also, the front wheel may be disposed on the caster body to be rotatable centering on a horizontal shaft.

Each of the rear casters 131b may include a caster body and a rear wheel. In this case, the caster body may be disposed on the rear portion of each link back arm and may include a vertical shaft installed at each link back arm. Also, the rear wheel may be disposed on the caster body to be rotatable centering on a horizontal shaft.

The plurality of drive wheels 135a and 135b and the plurality of front casters 131a and the rear casters 131b may be rotated while uniformly contacting the ground, and the mobile robot 100 may travel in response to the rotation of the plurality of drive wheels 135a and 135b.

When the plurality of front casters 131a are raised or lowered according to the shape of the ground, the corresponding plurality of drive wheels 135a and 135b are lowered or raised, and thus a suspension effect is generated. This suspension effect is also generated in the linked plurality of rear casters 131b.

Meanwhile, as the mobile robot 100 is repeatedly driven by the travel unit 130, foreign substances (e.g., dust, sand, soil, hair, thread, etc.) are accumulated on the plurality of casters 131a and 131b. In this case, the plurality of casters 131a and 131b scratch the floor, which may cause to wear or damage a marble wax layer, a stone surface, and the like of the floor.

Accordingly, in the present disclosure, an operating method for periodically removing foreign substances accumulated on the plurality of casters 131a and 131b of the mobile robot 100 is implemented. In addition, an operating method is implemented to detect an accumulation of foreign substances on the plurality of casters 131a and 131b, notify the detection to a manager, and remove the foreign substances while minimizing interference with a work being performed.

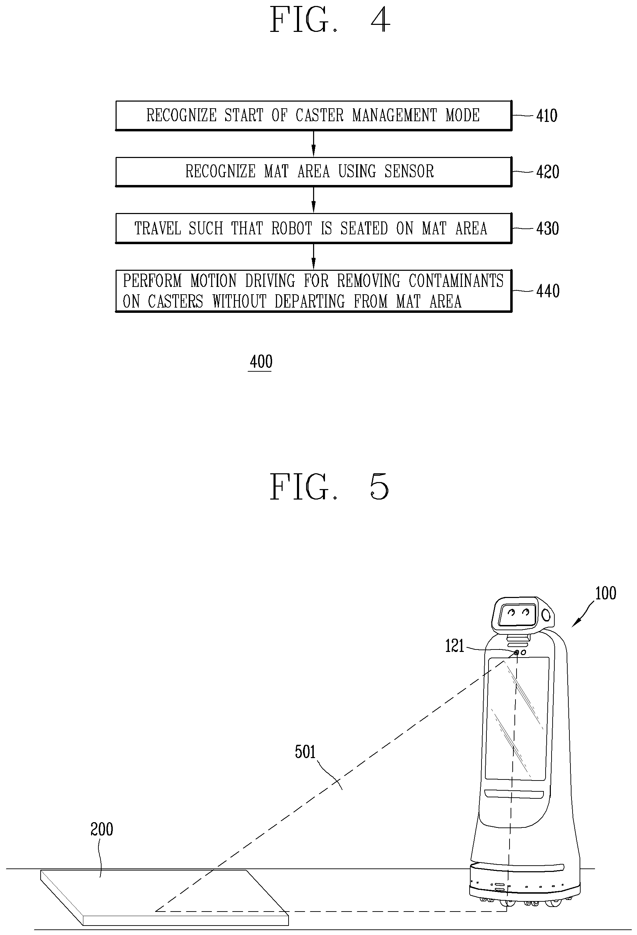

FIG. 4 is a flowchart illustrating an operating method 400 of a mobile robot in accordance with an embodiment of the present disclosure.

Referring to FIG. 4, the operating method 400 according to the present disclosure starts with a step (410) in which the control unit 180 of the mobile robot 100 recognizes that a caster management mode has started.

The caster management mode refers to an operating mode for removing contaminants from at least portions of the casters 131a and 131b of the mobile robot 180. Broadly, the caster management mode may include an operating mode that is divided into moving the mobile robot 100 to a specific area, and performing motion driving for removing contaminants on the specific area.

The caster management mode may be started based on an input or a signal generated according to condition satisfaction. Specifically, when the manager performs an input to the mobile robot 100 to perform the caster management mode, or when the mobile robot 100 determines by itself that caster cleaning is necessary as a predetermined condition is satisfied, the control unit 18 of the mobile robot 100 may generate a start signal of the caster management mode, and thus the caster management mode can be started.

Next, the control unit 180 of the mobile robot 100 performs a step (420) of detecting a mat area using a sensor of the mobile robot 100.

Here, the mat area refers to an area where a floor mat including a function of sucking/collecting foreign substances is installed.

At this time, there is no particular limitation on a type or material of the floor mat, but the floor mat may have a shape or be made of a material by which foreign substances (e.g., dust, sand, soil, hair, thread, etc.) attached to the travel unit, specifically, the casters 131a and 131b, can be easily detached to be collected, for example, may be made of a material that is rough and has intake holes.

For example, the floor mat may be a coil mat. For another example, the floor mat may be a dust absorbing mat (or dust suction mat, dust removing mat) having a sterilization function. For still another example, the floor mat may be a cleaning mat having a structure that includes at least one motor to collect duct by suction force. In addition, the floor mat may also be formed to include a plurality of suction holes or may be formed in a multi-layered structure in order to improve a function of absorbing/collecting foreign substances.

The mobile robot 100 may detect a mat area by comparing a material, color and the like of the floor, on which the mobile robot 100 travels, with those of the mat area through a sensor, for example, the camera 121.

Here, detecting the mat area may include detecting a position of the mat area, a shape (e.g., size, shape, etc.) of the mat area, and a point where the mobile robot 100 can be easily seated.

For example, detecting the mat area may include recognizing information related to a distance from a current location of the mobile robot 100 to a location of an area where the floor mat is disposed, a direction, a route, and obstacles on the route.

For example, detecting the mat area may include recognizing, by the control unit 180 of the mobile robot 100, whether the mat area is square, rectangular to be long in one side, or circular, and/or whether an entire area is greater than or equal to a reference value.

Also, for example, when there is an entrance/exit point at which the mobile robot 100 can easily move onto or out of the mat area (e.g., a point where a laminated structure is lower or gentler than other points at an edge of the floor mat, a corner, etc.), detecting the mat area may include detecting the entrance/exit point.

When the mat area is detected, the control unit 180 transfers a travel command to the travel unit 130 of the mobile robot so that the mobile robot 100 moves onto the detected mat area (430).

According to an embodiment, the control unit 180 may determine a point at which the mobile robot 100 is to move onto the detected mat area, adjust a posture of the mobile robot 100 to face the determined point (e.g., adjust the determined point to direct the front based on the traveling direction of the moving robot 100), and then control the mobile robot to be placed on the mat area via the determined point.

At this time, the point where the mobile robot 100 is to move onto the mat area may be determined based on current posture and traveling direction of the mobile robot 100. Alternatively, the point where the mobile robot 100 is to move onto the mat area may be determined as a point where the mobile robot can easily move onto the mat area, for example, a point having the lowest height from the floor.

In addition, according to an embodiment, when the mobile robot 100 is placed on the mat area, the control unit 180 may further perform a process of checking whether all of the plurality of casters 131a and 131b are brought into contact with the floor of the mat area.

This is to suppress a motion for cleaning from being started in a state where some of the casters 131a and 131b are floating from the floor of the mat area or have different heights from the floor of the mat area even after the mobile robot 100 is placed on the mat area.

As a result of the check, when at least some of the plurality of casters 131a and 131b are floating from the bottom surface of the mat area or have different heights from the bottom surface of the mat area, the mobile robot 100 may repeatedly move back and forth on the mat area or rotate left and right in-situ until all of the plurality of casters 131a and 131b are brought into contact with the floor of the mat area. This operation is not included in the motion for caster cleaning.

In an embodiment, in response to the mobile robot 100 being seated on the mat area, the control unit 180 may output a feedback signal notifying the start of cleaning the casters. The feedback signal output may be at least one of visual information output through the touch screen 151, voice/beep output through the sound output module 152, and LED blinking through the optical output module 153.

When the mobile robot 100 is seated on the mat area, the motion driving for removing contaminants from the casters is started, and at this time, it is continuously monitored whether the mobile robot 100 moves out of the mat area (440). That is, the control unit 180 of the mobile robot 100 controls the mobile robot 100 to perform predetermined motion driving for decontaminating the casters 131a and 131b within the mat area.

Here, that the mobile robot 100 does not move out of (depart from) the mat area may mean that the casters 131a and 131b are located within the mat area.

Whether the casters 131a and 131b are located within the mat area may be monitored through, for example, the camera 121 of the mobile robot or a contamination detection sensor 143 installed on the bottom plate 101B.

According to an embodiment, while the predetermined motion driving for decontaminating the casters 131a and 131b within the mat area, the control unit 180 may continuously monitor whether the casters 131a and 131b are located within the mat area and vary the predetermined motion driving based on a result of the monitoring.

Here, varying the predetermined motion driving may include changing a current rotating direction or reducing a moving distance/interval as well as changing the motion method.

The motion driving for removing contaminants from the casters of the mobile robot 100 may mean that the mobile robot 100 moves by a predetermined motion within the mat area to remove foreign substances stuck on the casters.

Specifically, the control unit 180 may control the travel unit 130 to perform at least one of an in-situ rotational motion and a repeated forward and reverse driving motion in a state in which the mobile robot 100 does not leave the mat area.

In addition, the control unit 180 may provide rotational force so that each of the plurality of drive wheels 135a and 135b alternately rotates in a forward direction and a reverse direction through the motion driving for removing foreign substances attached to the casters. Accordingly, while the front casters 131a and the rear casters 131b linked with each of the plurality of drive wheels 135a and 135b rotate in opposite directions, that is, perform forward and reverse rotations, foreign substances on the casters can be removed and collected on the mat area.

In an embodiment, specific driving of the motion driving for removing the foreign substances stuck on the casters may be differently determined depending on information related to the mat area. Here, the information related to the mat area may include at least one of shape, size, location, and area ratio of the mat area.

For example, when the shape of the mat area is circular or square, a motion that the mobile robot repeatedly rotates in-situ in clockwise and counterclockwise directions may be performed as specific driving of the motion driving. In addition, when the shape of the mat area is narrow and long, a motion that the mobile robot repeatedly moves forward and reverse may be performed as specific driving of the motion driving.

As described above, the mobile robot related to the present disclosure can recognize the mat area according to the start of the caster management mode to suppress damage of the floor due to the casters with foreign substances stuck thereon, move onto the recognized mat area, and perform appropriate motion driving not to depart from the mat area, thereby removing the contaminants stuck on the casters by itself without the help of a manager.

FIG. 5 is an exemplary view for explaining a method in which the mobile robot recognizes the mat area, in relation to the step (420) of FIG. 4.

In response to the recognition that the caster management mode has been started, the mobile robot 100 may stop a task or work being performed or stop moving, and perform a motion for confirming a location of a mat area to reach.

The mat area is an area where a floor mat is installed to remove foreign substances from the casters, and may be located around the mobile robot 100 or may be preset at a designated location in a certain space.

In an embodiment, the mat area may be determined to be located close to a current location of the mobile robot 100.

To this end, the mobile robot 100 may activate the camera 121 and detect whether the mat area is located within a viewing angle range. While detecting the location of the mat area, the mobile robot 100 may rotate in-situ or travel in a zigzag or spiral manner in a region of a predetermined range.

In another embodiment, the mat area may be determined to be one of mat areas that are included in a route set in the mobile robot 100 or close to the route.

To this end, the mobile robot 100 may utilize pre-stored map information and route information, to detect a location of a mat area that is included in a route for the mobile robot 100 to travel from a current location or a mat area close to the route to travel. The utilization of the map information and route information can result in faster detection and determination of the mat area than detection through the camera 121, when the mat area is not located near the mobile robot 100. However, even at this time, when the mobile robot 100 approaches a mat area within the route or close to the route, the camera 121 operates to accurately detect the mat area and a location of the mat area.

The control unit 180 of the mobile robot 100 may recognize the mat area 200 by comparing and analyzing a floor (bottom surface) within a viewing angle range 501 of the camera 121.

For example, when a mat area 200 is detected in the viewing angle range 501 of FIG. 5, the existence of the mat area 200 may be confirmed and recognized by comparing and analyzing differences of material, color, ground height, and the like between a floor of the mat area 200 and a floor of a region which does not belong to the mat area.

In this way, such accurate confirmation of the existence of the mat area 200 through the camera 121 is performed under assumption that an actual floor mat may not exist at a designated location of the mat area. This is because a floor at the designated location of the mat area may be damaged due to the casters if the motion for removing foreign substances on the casters is started even without an actual floor mat on the designated location.

In this way, when a portion of the mat area 200 is detected within the viewing angle range 501 of the mobile robot 100, the control unit 180 may confirm whether the detected mat area 200 increases in size while the mobile robot 100 is traveling forward, and move the mobile robot 100 to the mat area 200, while adjusting a posture of the mobile robot, in a direction that the size of the detected mat area increases.

The process in which the mobile robot 100 moves toward the mat area 200 is partially similar to a process in which the mobile robot 100 attempts to dock at a charging station to charge a battery. However, there is a difference in that the mobile robot 100 moves while checking the size of the mat area 200 included in the viewing angle range 501 of the mobile robot 100 by itself, not based on a signal.

Meanwhile, in FIG. 5, the mat area included in the viewing angle range 501 increases while the mobile robot 100 approaches the mat area 200 within a predetermined distance, but decreases again as the mobile robot 100 more approaches the mat area 200.

As illustrated in FIG. 5, when the viewing angle range 501 of the camera 121 of the mobile robot 100 includes a floor that meets a main body of the mobile robot 100 in the vertical direction, it may be said that a time point at which the size of the mat area 200 included in the viewing angle range 501 corresponds to a time point at which the mobile robot 100 moves onto the mat area 200.

Accordingly, in one embodiment, while the entire mat area 200 is included in the viewing angle range 501 of the camera 121, the control unit 180 may acquire information related to the mat area 200 (e.g., shape, size, location, area ratio, etc. of the mat area 200) through image analysis, and calculate a coordinate point on the mat area 200 on which the mobile robot 100 is to be seated based on the acquired information and a current location of the mobile robot 100.

And, when the mobile robot 100 reaches a point where the size of the mat area 200 included in the viewing angle range 501 decreases, the control unit 180 may calculate in real time a relative distance with the calculated coordinate point, and control the travel unit 130 to slowly travel toward the coordinate point.

Although not illustrated, when it is detected through an obstacle sensor of the mobile robot 100 that an obstacle exists around or on the mat area 200, the control unit 180 may control the mobile robot 100 to attempt to travel toward the coordinate point of the mat area 200 by avoiding the obstacle, and if failed, may output a voice message notifying the existence of the obstacle or may maintain a standby state for a predetermined time.

When the mobile robot 100 reaches the coordinate point on the mat area 200, the control unit 180 may confirm through the camera 121 whether the mobile robot 100 is safely located on the mat area 200, preferably, whether the mobile robot 100 is located on a center of the mat area 200.

As a result of the confirmation, when it is recognized that the mobile robot 100 is safely seated on the mat area 200, the control unit 180 may output a feedback signal informing that the predetermined motion starts to be performed before performing the predetermined motion to remove foreign substances from the casters.

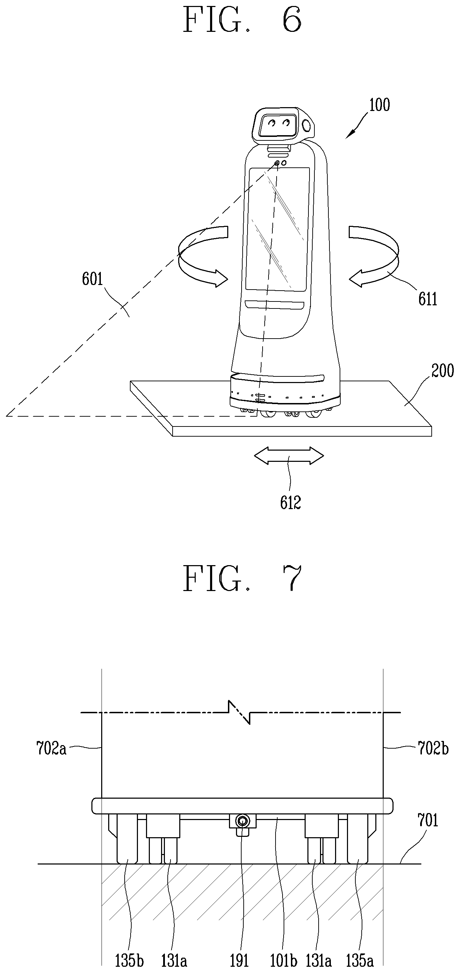

FIG. 6 is a diagram for explaining in detail a method in which the mobile robot performs a motion for decontaminating the casters on the mat area, in relation to the step (430) of FIG. 4.

When it is confirmed that the mobile robot 100 is safely seated on the mat area 200, a predetermined motion for removing foreign substances from the casters may be performed.

The foreign substances stuck on the casters 131a and 131b of the mobile robot 100 can be removed by using frictional force between the mat area 200 and the wheels of the casters 131a and 131b through driving motion on the mat area 200.

At this time, in order to remove foreign substances (e.g., hair, thread, etc.) entangled around the casters 131a and 131b, motion driving may be performed so that the wheels of the casters 131a and 131b rotate in an opposite direction to a normal traveling direction. In addition, in order to more reliably remove foreign substances, motion driving that the same operation is repeated several times or a rotational direction of the wheels of the casters 131a and 131b is alternately changed may be performed.

A designated motion for removing foreign substances of the casters 131a and 131b may include an operation of performing an in-situ rotational motion of the mobile robot 100 and a repeated forward and reverse driving motion on the mat area 200 while maintaining a state where the mobile robot 100 does not depart from the mat area 200. For example, as illustrated in FIG. 6, an in-situ rotational motion 611 and a repeated forward and reverse driving motion 612 may be alternately performed.

To this end, the control unit 180 may generate a control signal for providing rotational force so that each of the plurality of drive wheels 135a and 135b of the travel unit 130 alternately rotates in the forward direction and in the reverse direction, and transfer the rotational force to each linked drive motor.

An execution time of the predetermined motion for removing foreign substances from the casters 131a and 131b may be proportional to an accumulated travel distance of the mobile robot 100, or may be determined based on a result of detection of remaining foreign substances when it is possible to check (recognize) whether the foreign substances have been removed.

For example, the control unit 180 may increase an execution time of the predetermined motion for removing foreign substances as the accumulated travel distance of the mobile robot 100 increases. Afterwards, when the predetermined motion is completed, to the control unit 180 may reset the accumulated travel distance.

Alternatively, for example, the control unit 180 may repeat the predetermined motion from the beginning when a removed degree of foreign substances from the casters 131a and 131b is not lowered down to a predetermined level or a difference of the removed degree before and after the removal is not detected by the predetermined range or more.

The control unit 180 of the mobile robot 100 keeps monitoring whether the main body of the mobile robot 100, more precisely, the casters 131a and 131b do not depart from the mat area 200 while performing the predetermined motion to remove foreign substances from the casters.

To this end, as illustrated in FIG. 6, the control unit 180 may keep checking size and ratio of the mat area included in the viewing angle range 601 through the camera 121 of the mobile robot, and perform the predetermined motion while adjusting the posture of the mobile robot 100 in real time.

For example, when at least some of the casters 131a and 131b of the mobile robot 100 move close to a boundary surface of the mat area 200, the control unit 180 may control the rotational direction of the corresponding drive wheels 135a and 135b such that the mobile robot 100 moves toward the inside of the mat area 200.

Specifically, the control unit 180 of the mobile robot 100 may keep monitoring whether all of the front casters 131a and the rear casters 131b are located within the mat area 200 through a sensing unit, for example, the camera 121 or an IP sensor during motion driving. In addition, the control unit 180 may vary motion driving based on the monitoring result such that all of the casters 131a and 131b are located within the mat area.

FIG. 7 is an exemplary view for explaining a confirmation operation before a mobile robot performs motion driving of a caster management mode according to an embodiment of the present disclosure.

In one embodiment, an additional process of confirming whether all the casters of the mobile robot 100 have been brought into contact with the floor of the mat area 200 before performing a predetermined motion may be included.

For example, when cameras or the like are mounted around the casters, images acquired through the cameras may be analyzed to confirm whether all of the casters are in contact with the floor of the mat area 200.

As another example, when no cameras are mounted around the casters, the drive wheels shortly and quickly repeat forward and reverse movement a predetermined number of times before performing the predetermined motion, so as to transmit a suspension effect to all of the casters, thereby performing an initial posture operation so that all of the casters are in contact with the floor of the mat area 200.

Referring to FIG. 7, it is checked whether the left and right drive wheels 135a and 135b and the casters 131a linked thereto are all in contact with a floor 701 of a mat area. This can be confirmed through image analysis when cameras or IR sensors are installed around the mat area or when cameras are mounted near the casters 131a.

In addition, it is checked whether virtual lines 702a and 702b where perpendicular lines of left and right frame edges of the mobile robot 100 and the floor 701 meet are all included within the boundary of the mat area. This is similar to checking whether all of the casters 131a are in contact with the floor. In this way, checking whether the left and right frame edges of the mobile robot 100 come within the mat area is performed under assumption that at least the casters 131a are mounted between the left and right frame edges of the main body. Therefore, depending on the shape of the mobile robot 100, it may be necessary to directly check whether the bodies of the casters 131a are completely located within the boundary of the mat area.

In this way, it may be checked whether all of the casters 131a and 131b are in contact with the floor of the mat area before performing motion driving. This can prevent in advance that foreign substances are not removed from several casters due to non-generation of frictional force. In addition, whether at least the casters 131a and 131b move into the boundary of the mat area can be checked, thereby preventing in advance wear or damage of the floor due to motion driving performed on a position out of the mat area.

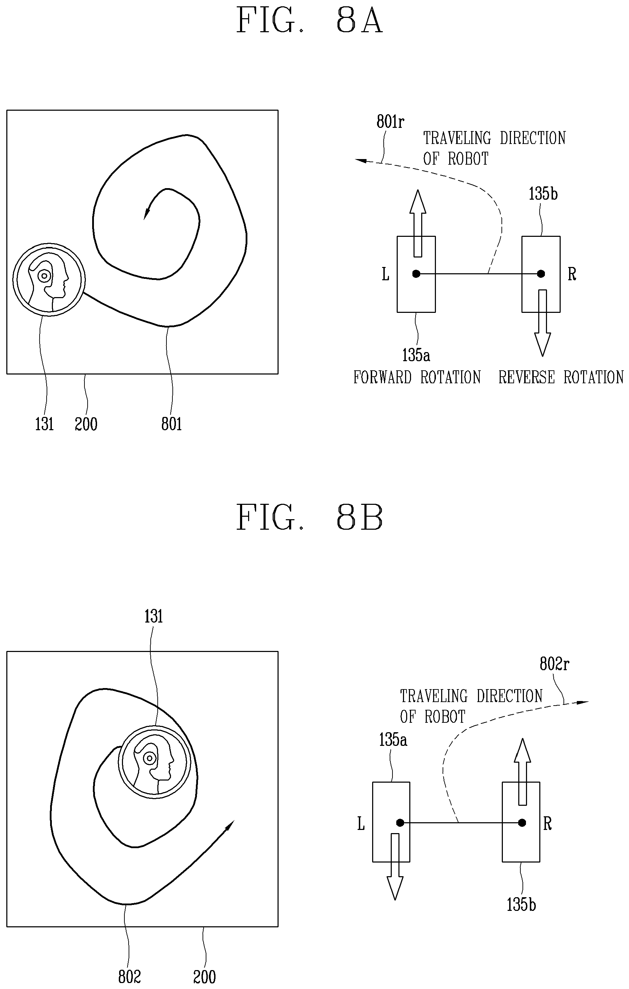

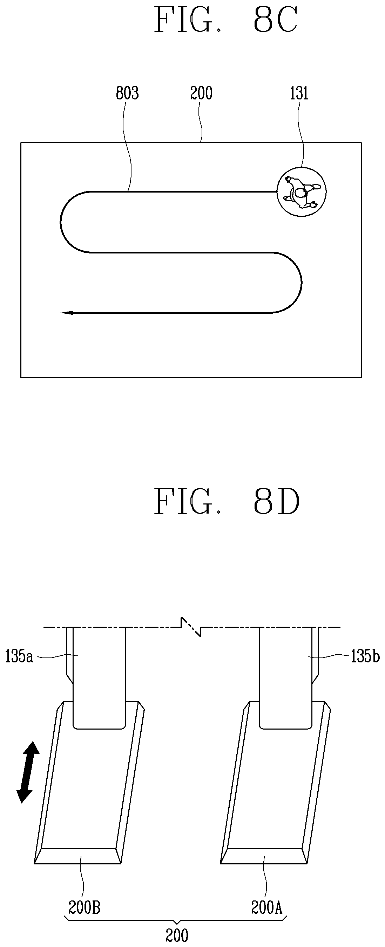

FIGS. 8A, 8B, 8C, and 8D are different exemplary views for explaining specific driving of motion driving related to characteristics of a mat area.

In an embodiment, the mobile robot 100 may differently determine specific driving of motion driving based on information related to the mat area 200, that is, shape, size, location, and area ratio of the mat area 200.

The mat area is an area where a floor mat is installed to remove foreign substances from the casters, and may have a size which is a predetermined value smaller than a size of the actual floor mat. For example, when the floor mat is 1 m in length x width, the mat area may have a value of 0.9 to 0.95 m. This is to ensure that the mobile robot 100 does not completely depart from the mat area while performing predetermined motion driving on the mat area.

The control unit 180 may change specific driving of the motion driving based on the shape or area ratio of the mat area 200 so that the mobile robot does not move out of the mat area 200 while performing the motion driving.

For example, in case of performing a spiral rotational motion, the control unit 180 may control the travel unit 130 to perform a regular spiral rotational motion when the shape of the mat is square. Also, for example, when the shape of the mat is rectangular, the control unit 180 may control the travel unit 130 to perform a spiral rotational motion that is distorted in a direction with a long edge (side).

Alternatively, the control unit 180 may store specific driving matched for each shape of the mat area 200 in advance in the memory 170 of the mobile robot 100, and then acquire specific driving that matches the shape of the mat area 200 confirmed through the camera 121 from the memory 170, so that the specific driving can be performed.

The control unit 180 may change specific driving of the motion driving based on the size of the mat area 200 so that the mobile robot does not move out of the mat area 200 while performing the motion driving.

For example, when the size of the mat area 200 is small, the control unit 180 may remove foreign substances of the casters by performing only the in-situ rotational motion 611 so as not to move much from the seated location. On the other hand, when the size of the mat area 200 is large, the control unit 180 may control the mobile robot 100 to travel by expanding the in-situ rotational motion 611 to a spiral rotational motion, and varying a forward and reverse travel distance of the repeated forward and reverse driving motion 612 to be longer.

The control unit 180 may change specific driving of the motion driving according to the location where the mat area 200 is installed so as to consider surrounding situations. The specific driving at this time may be considered to include not only the operation of the wheel module for removing foreign substances of the casters but also an external notification.

For example, when area region around the mat area 200 is determined as a region in which people move frequently or which is complex, the control unit 180 may further reduce driving speed of the wheel module for safety and also emit LED light or output guide sound to externally notify that the caster management mode is being performed.

Hereinafter, examples of specific driving of motion driving for removing foreign substances from the casters will be described for each characteristic of the mat area.

FIGS. 8A and 8B illustrate examples in which a mat area has a shape similar to a square and has a narrow area, namely, examples of performing a spiral in-situ motion as predetermined motion driving. In this case, the mobile robot 100 may perform an in-situ rotational motion or a spiral in-situ rotational motion so as not to depart much from a seated position.

FIG 8A illustrates an example in which the mobile robot performs a spiral in-situ motion 801 in a counterclockwise direction on the mat area 200. The wheels of the casters 131 rotate forward or reverse while the mobile robot 100 perform the spiral in-situ motion 801.

To this end, referring to the drawing on the right, the control unit 180 provides driving force to the drive motor linked with the left drive wheel 135a such that the left drive wheel 135a of the mobile robot rotates forward based on a proceeding direction 801r of the mobile robot. In addition to this, the control unit 180 provides driving force to the drive motor linked with the right drive wheel 135b of the mobile robot such that the right drive wheel 135b rotates reverse (backward). At this time, the control unit 180 may transmit driving force, which is greater than that provided to the drive motor linked with the right drive wheel 135b, to the drive motor linked with the left driving wheel 135a, so as to adjust rotational speed of the right drive wheel 135b to be slower than rotational speed of the left drive wheel 135a.

By this control, the front caster and the rear caster linked with the left drive wheel 135a rotate in the forward direction, while the front caster and the rear caster linked with the right drive wheel 135b rotate in the reverse direction.

Thereafter, as illustrated in FIG. 8B, when the mobile robot performs a spiral in-situ motion 802 in a clockwise direction on the mat area 200, the front caster and the rear caster which have rotated forward when performing the spiral in-situ motion 801 in the counterclockwise direction, rotates in the reverse direction and the front caster and the rear caster which have rotated reverse rotate in the forward direction.

Specifically, referring to the right drawing of FIG. 8B, the control unit 180 provides driving force to the drive motor linked with the left drive wheel 135a so that the left drive wheel 135a of the mobile robot reversely rotates based on an actual proceeding direction 802r of the mobile robot. In addition to this, the control unit 180 provides driving force to the drive motor linked with the right drive wheel 135b of the mobile robot such that the right drive wheel 135b rotates forward. At this time, the control unit 180 may transmit driving force, which is smaller than that provided to the drive motor linked with the right drive wheel 135b, to the drive motor linked with the left driving wheel 135a, so as to adjust rotational speed of the right drive wheel 135b to be faster than rotational speed of the left drive wheel 135a.

In this way, one pair of front caster and rear caster of the mobile robot 100 rotates in the forward direction while the remaining pair of front caster and rear caster rotate in the reverse direction. Afterwards, the motion driving is performed by alternating the rotational direction. Accordingly, the mobile robot 100 can remove foreign substances stuck on the casters 131a and 131b by itself using frictional force of the mat area 200.

FIG. 8C illustrates an example of performing zigzag driving as predetermined motion driving when the mat area is large. At this time, the mobile robot 100 may perform motion driving in a reverse direction 803 opposite to a forward direction, which is a normal traveling direction.

To this end, driving force is transmitted to the drive motors linked with the left drive wheel 135a and the right drive wheel 135b of the mobile robot so that the left drive wheel 135a and the right drive wheel 135b rotate in the reverse direction. Accordingly, the wheels of the front caster and the rear caster linked with the left drive wheel 135a also rotate in the reverse direction, and the wheels of the front caster and rear caster linked with the right driving wheel 135b also rotate in the reverse direction.

In this way, the motion driving can be performed so that the wheels of the casters 131a and 131b rotate in the reverse direction opposite to the forward direction in which the wheels usually rotate, thereby more reliably removing foreign substances stuck on the casters 131a and 131b.

Although not illustrated, after zigzag driving is performed on the mat area 200 in FIG. 8C, zigzag driving in the vertical direction may be performed once more or zigzag driving in the forward direction may be performed along the same route.

FIG. 8D illustrates an example in case where only particular motion driving is possible according to the shape of the mat area. For example, the mat area 200 of FIG. 8D is installed in a form including mat pieces 200A and 200B so that only left and right wheels can roll along the mat pieces 200a and 200b like rails. In this type of mat area, the left and right drive wheels 135a and 135 of the mobile robot 100 may rotate forward or reverse simultaneously at the same speed, so that foreign substances on the linked casters 131a and 131b can be removed.

The foregoing description has been given of such a series of operations for removing foreign substances stuck on the casters periodically or according to the start command of the caster management mode.

In general, as an accumulated travel distance increases, a degree of contamination of the casters also increases. Therefore, the caster management mode can be performed at a set period. However, in order to minimize damage on a floor, it may be more preferable that a large quantity of foreign substances stuck on the casters could be removed as soon as being detected.

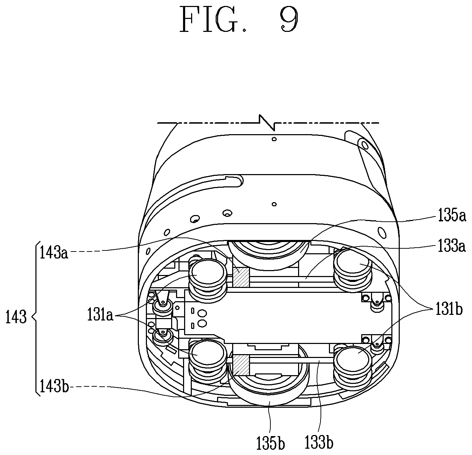

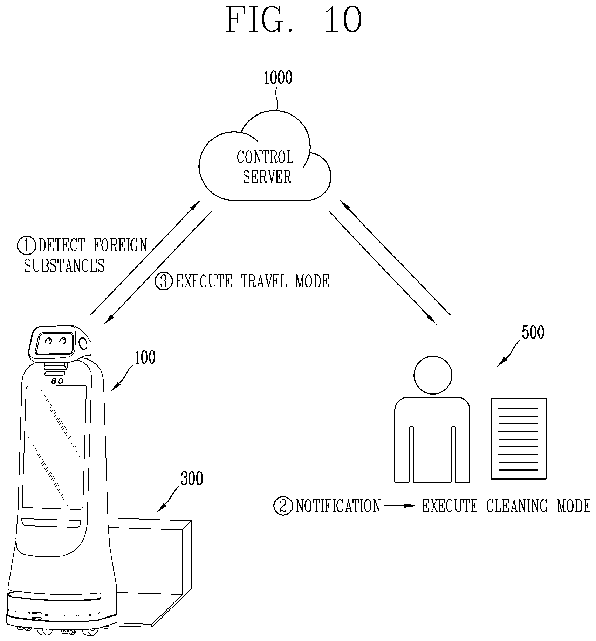

To this end, hereinafter, a description will be given of a method for monitoring adsorption of foreign substances on casters and a method for more quickly removing the foreign substances on the casters as a result of the monitoring, with reference to FIGS. 9 and 10.

FIG. 9 is a view illustrating an example of a contamination detection sensor mounted on a mobile robot according to an embodiment of the disclosure, and FIG. 10 is an exemplary view for explaining a method of starting a caster management mode by transmitting a contamination detection result to a remote manager terminal through a control server.

First, referring to FIG. 9, sensors for detecting caster contamination, namely, contamination detection sensors 143 may be mounted on the bottom plate of the mobile robot near the front caster 131a linked with the left drive wheel 135a and the front caster 131a linked with the right drive wheel 135b.

Specifically, the contamination detection sensors 143, for example, cameras or IR sensors may be installed at a rear portion of the front caster 131a linked with the left drive wheel 135a and a rear portion of the front caster 131a linked with the right drive wheel 135b, respectively. In addition, images or signals obtained through the contamination detection sensors 143 may be analyzed to recognize the degree of contamination of the casters linked with the left drive wheel 135a or the caster linked with the right drive wheel 135b periodically or in real time.

On the other hand, although not illustrated, the contamination detection sensor 143 may not directly monitor the degree of contamination of the caster, but detect a curve of a floor on which the mobile robot 100 has traveled, so as to determine whether the caster management mode needs to be performed. To this end, the control unit 180 may detect a curve of a floor, on which the mobile robot 100 has traveled, by using an IR sensor mounted on a specific position of the bottom plate or body frame of the mobile robot 100, and recognize a difference value of the detected curve, thereby determining whether to perform caster cleaning.

As another example, based on the fact that the mobile robot 100 periodically needs to charge a battery, it may also be possible to monitor whether foreign substances have been stuck on the casters or the degree of contamination of the casters, when the mobile robot 100 attempts to dock or undock at or from a charging station, by using a camera mounted on the charging station.

Meanwhile, a detection result of the contamination detection sensor 143 is transmitted to the control unit 180 of the mobile robot 100. The control unit 180 may generate a corresponding signal when it is determined that the caster management mode needs to be performed because the degree of contamination of the casters is equal to or greater than a reference range.

The control unit 180 may generate a signal for starting the caster management mode by itself based on the generated signal. In this case, the start of the caster management mode may be recorded in the memory 170 or the like.

Alternatively, the control unit 180 may transmit the generated signal to a manager's terminal through the communication unit 110 so that the caster management mode is performed by the manager.

Referring to FIG. 10, when caster contamination is detected as a result of detecting foreign substances on the casters of the mobile robot 100, the control unit 180 determines whether caster cleaning is required, and transmits a predetermined control server 1000 (①). The control server 1000 transmits the detection result of the foreign substances on the casters to a remote manager terminal 500 (②). When the manager inputs an execution command for executing the caster management mode in response to the detection result received by the manager terminal 500, the execution command is transmitted to the mobile robot 100 through the control server 100, such that the caster management mode can be started (③).

Meanwhile, although not illustrated, the control unit 180 of the mobile robot may vary an execution time of motion driving in the caster management mode, depending on the detection result of the contamination detection sensor 143, before and after the execution of the caster management mode.

For example, when it is determined as the detection result of the contamination detection sensor 143 that the degree of contamination of the casters needs caster cleaning and is greater than or equal to a threshold level, a motion driving time of the caster management mode may further increase. Alternatively, for example, during motion driving in the caster management mode or after performing motion driving at least one time, when a decontamination degree of the casters is not so different from before according to the detection result of the contamination detection sensor 143, the motion driving time of the cast management mode may further increase or a specific driving method may change.

When the motion driving in the caster management mode is completed and the detection result of the contamination detection sensor is reduced below a reference value, the caster management mode may be terminated.

Specifically, the control unit 180 of the mobile robot may terminate the caster management mode based on the detection result of the contamination detection sensor 143. When the caster management mode ends, the control unit 180 may move the mobile robot 100 to a position before the caster management mode starts and control the mobile robot 100 to perform a stored next operation mode subsequently. For example, an operation of docking at a charging station to perform charging, which is the next operation mode of the mobile robot 100, may be performed.

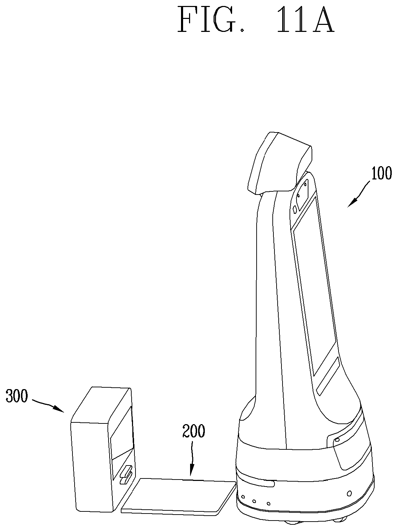

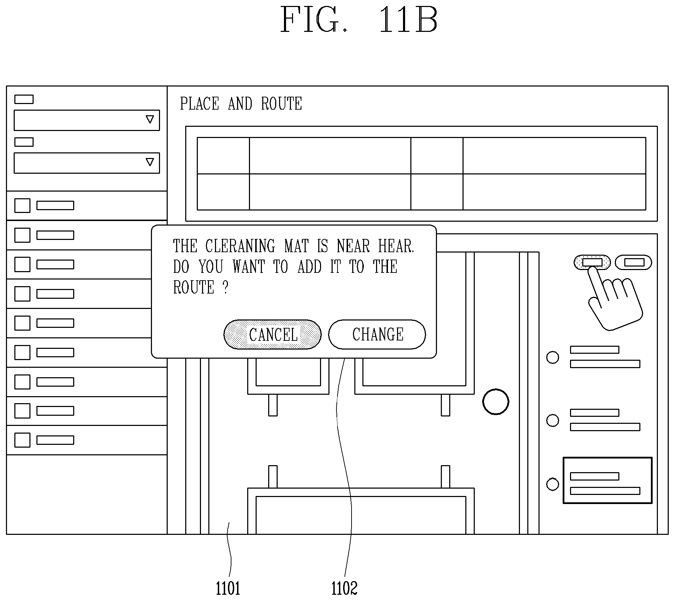

FIGS. 11A and 11B are views for explaining different examples in which a mobile robot performs a caster management mode when a specific condition is satisfied while traveling along a set route.

The floor mat installed in the mat area used to remove foreign substances on the casters is a consumable product. Therefore, hereinafter, a description will be given of various embodiments for optimally setting a performance period of the caster management mode in consideration of a contamination degree of the casters of the mobile robot 100 and a replacement period of the floor mat.

The control unit 180 may operate to generate a control signal for starting the caster management mode by itself when the mobile robot 100 satisfies a preset condition.

At this time, the predetermined condition may include at least one of after a set work or task is completed, for each preset time (e.g., about every 6 to 8 hours), after a specific driving course is completed, when passing through a specific point (POI), when an accumulated driving distance reaches a predetermined value or exceeds a threshold value, and when the mobile robot 100 approaches a charging station for charging or undocks from the charging station after completion of charging.

FIG. 11A illustrates an example of performing the caster management mode when the mobile robot is charged or the charging is released.

When a charging signal is generated due to a low battery, the control unit 180 of the mobile robot 100 may control the travel unit 130 such that the mobile robot 100 moves to a charging station 300 to charge the battery.

Accordingly, when it is detected that the mobile robot 100 approaches the charging station 300 within a reference distance, the mobile robot 100 may generate a control signal for recognizing the mat area 200 around it.

At this time, the mobile robot 100 is in a state where a posture of a charging terminal 191 (see FIG. 3A) disposed on the bottom plate of the mobile robot 100 has been adjusted to face the front of the charging station 300, in order to dock at the charging station 300.

Accordingly, the mat area 100 may be located on a (virtual) docking path toward the charging station 300, such that the mobile robot 100 can be quickly and safely seated on the mat area 200. For example, as illustrated in FIG. 11A, the mat area 200 may be installed by being coupled to the front of the charging station 300.

On the other hand, the control unit 180 of the mobile robot 100 may charge the battery on the charging station 300a, and then when the charging is completed, may generate a control signal for recognizing a nearby mat area 200 other than a working position after undocking.

In another example, the mat area 200 may be installed at a designated public area, like the charging station. In this case, information related to the public area where the mat area 200 is installed may be included in a map of the mobile robot 100.

FIG. 11B illustrates an example of performing the caster management mode by including a mat area in a set driving route when the driving route is set in the mobile robot 100.

To this end, the control unit 180 may change the route to include a mat area for cleaning the casters within the set route when a preset condition is satisfied while the mobile robot 100 is traveling along the set route.

When it is detected that the mat area 200 exists near the mobile robot 100 while the mobile robot 100 is traveling along the set route, the control unit 180 transmits a result of the detection to a manager terminal or record the same as map information.

In this case, the operation of detecting the presence of the nearby mat area 200 may be performed based on a result of the detection of the contamination detection sensor for the casters.

FIG. 11B illustrates an exemplary screen for changing a route to include a mat area based on a manager's response. An inquiry 1102 regarding whether to change a route to include a detected mat area 200 may be displayed on a screen 1101 of a manager terminal. When a route change is selected in response to the query 1102, the route is reset to include the mat area 200 detected by mobile robot 100. Thereafter, when the mobile robot 100 enters the mat area within the route, the control unit 180 controls the travel unit 130 to perform motion driving for removing foreign substances from the casters.

On the other hand, the manager may set a route to automatically include a mat area whenever the mobile robot 100 detects the mat area around the route through the screen 1101. In this case, a maximum number (e.g., 3) of mat areas that can be added to the route by the mobile robot 100 may be limited.

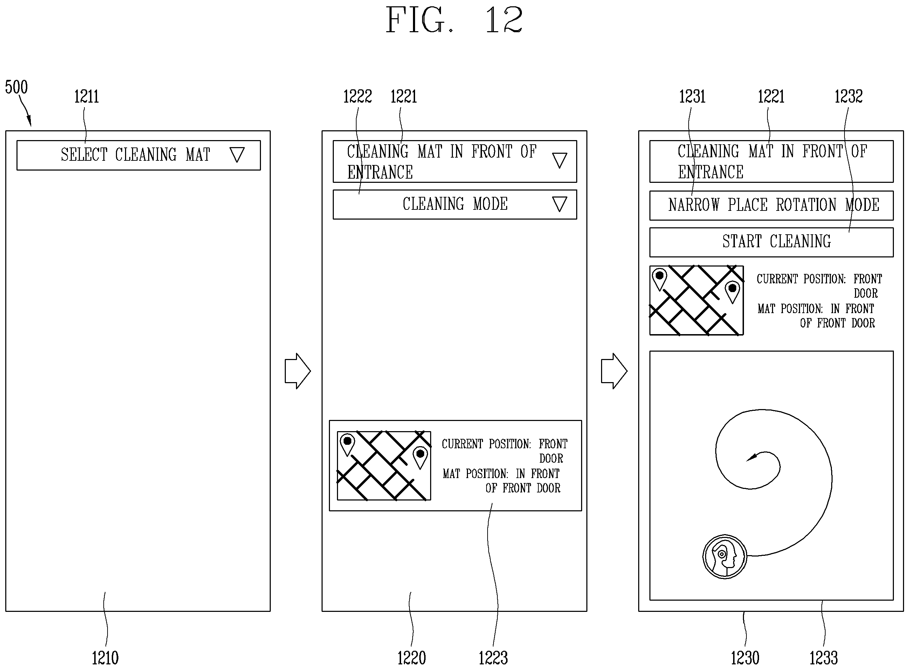

FIG. 12 is an exemplary view illustrating a setting screen for a mobile robot to input details of a caster management mode through a user terminal according to an embodiment of the present disclosure.

As illustrated in FIG. 12, a setting screen related to an execution of the caster management mode may include selection of the mat area 200, selection of motion driving for removing foreign substances from the casters, and an input for starting the caster management mode.

When an item 1211 for the selection of the mat area 200 is selected, a list of selectable mat areas 200 may be displayed on a first screen 1210. At this time, the selectable mat areas included in the list may be classified and determined based on criteria such as an installation location of the mat area, a shape of the mat area 200, whether the mat area is included in a set route, and a location close to a current location of the mobile robot 100, and the like.

For example, when a 'cleaning mat in front of entrance' is determined as the mat area 200 to be used (1221), an item 1222 for selecting motion driving of the caster management mode may be displayed, together with location information 1223 related to the determined mat area, on a second screen 1220.

For example, when a 'narrow place rotation mode' is determined as motion driving to be applied (1231), an input item 1232 for starting the caster management mode may be displayed, together with simulation information 1233 related to the determined motion driving, on a third screen 1230.

When a selection input is applied to the input item 1232, the mobile robot 100 may move to the cleaning mat in front of the entrance and perform the narrow place rotation mode, thereby performing the caster management mode for removing foreign substances stuck on the casters.

As described above, in a mobile robot and an operating method therefor according to embodiments of the present disclosure, the mobile robot can remove foreign substances accumulated on casters by itself without replacing the casters. This can prevent in advance an occurrence of scratches, wear or damage on a floor, on which the mobile robot travels, due to contaminants on the casters of the mobile robot. The casters can be cleaned periodically, which can extend a caster replacement cycle and minimize a risk due to the contaminants on the casters of the mobile robot when the floor is made of a high-quality material or under an environment in which cleanliness is emphasized. A time point for removing foreign substances accumulated on the casters can be determined by detecting a degree of contamination of the casters, and if necessary, a manager can be informed that caster cleaning is required, so as to perform a caster management mode, thereby more efficiently performing caster management. The mobile robot can select and perform appropriate motion driving for each characteristic of a mat area on which the casters are to be decontaminated, monitor whether all the casters are in contact with a floor before motion driving, and keep monitoring whether or not the mobile robot departs from the mat area during motion driving. This can prevent the floor, on which the mobile robot travels, from being damaged due to unintentional departure of the mobile robot from the mat area.

Further scope of applicability of the present disclosure will become apparent from the detailed description. It should be understood, however, that the detailed description and specific examples, such as the preferred embodiment of the invention, are given by way of illustration only, since various changes and modifications within the spirit and scope of the invention will be apparent to those skilled in the art.

Features, structures, effects, and the like described in those embodiments are included in at least one embodiment of the present disclosure, and are not necessarily limited to only one embodiment. Furthermore, features, structures, effects, and the like illustrated in each embodiment may be combined or modified with respect to other embodiments by those skilled in the art to which the embodiments belong. Therefore, contents related to such combinations and modifications should be construed as being included in the scope of the present disclosure.

In addition, the foregoing description has been made with reference to the embodiments, but it is merely illustrative and is not intended to limit the present disclosure. It will be apparent that other changes and applications can be made by those skilled in the art to which the present disclosure belong without departing from substantial features of the embodiments of the present disclosure. For example, each component specifically shown in the embodiments can be modified and practiced. And it should be construed that differences relating to such changes and applications are included in the scope of the present disclosure defined in the appended claims.

## Claims

1. A mobile robot comprising:
a travel unit configured to allow the mobile robot to travel using a wheel module including a plurality of drive wheels and casters,
a sensing unit configured to allow the mobile robot to detect a mat area; and
a control unit electrically connected to the travel unit and the sensing unit,
wherein the control unit generates a control signal for detecting the mat area in response to recognition that a caster management mode has started,
controls the travel unit such that the mobile robot is located on the mat area recognized based on the control signal, and
controls the travel unit such that the mobile robot performs motion driving for removing contaminants of the casters without departing from the mat area.

2. The mobile robot of claim 1, wherein the wheel module is mounted on a bottom plate of the mobile robot,
wherein the casters include front casters disposed on the front of a lower surface of the bottom plate and rear casters disposed on the rear of the lower surface, and
wherein the control unit checks whether the front casters and the rear casters are all in contact with a floor of the mat area, in response to the mobile robot being seated on the mat area, and then starts the motion driving.

3. The mobile robot of claim 2, wherein the control unit keeps monitoring whether the front casters and the rear casters are located within the mat area through the sensing unit during the motion driving, and varies the motion driving based on a result of the monitoring.

4. The mobile robot of claim 1, wherein the motion driving includes at least one of an in-situ rotational motion and a repeated forward and reverse driving motion of the mobile robot in a state that the mobile robot does not depart from the mat area, and
wherein the control unit provides rotational force to the plurality of drive wheels such that the plurality of drive wheels alternately rotate forward and reverse.

5. The mobile robot of claim 1, wherein the control unit differently determines specific driving of the motion driving based on information related to the mat area, and
wherein the information includes at least one of shape, size, location, and area ratio of the mat area.

6. The mobile robot of claim 1, further comprising contamination detection sensors mounted near the casters to detect contaminants on the casters, and
wherein the control unit generates a signal for starting the caster management mode based on a detection result of the contamination detection sensors.

7. The mobile robot of claim 6, further comprising a communication unit configured to transmit a wireless signal to a control server, in response to the detection of the contaminants on the casters as the detection result;
wherein the control unit generates a signal for starting the caster management mode when an execution response corresponding to the wireless signal is received from a manager terminal to the communication unit through the control server.

8. The mobile robot of claim 6, wherein the control unit varies an execution time of the motion driving according to the detection result of the contamination detection sensor in the caster management mode.

9. The mobile robot of claim 8, wherein the control unit ends the caster management mode based on the detection result of the contamination detection sensor, and controls the mobile robot to perform a stored next operation mode by moving to a position located before the caster management mode starts.

10. The mobile robot of claim 1, wherein the control unit controls the travel unit such that the mobile robot to move to a charging station when a charging signal is generated, and
generates a control signal for recognizing the mat area, in response to the mobile robot approaching the charging station within a reference distance.

11. The mobile robot of claim 1, wherein the control unit changes a set route to include the mat area when a preset condition is satisfied while the mobile robot travels along the set route, and
controls the mobile robot to perform the motion driving when the mobile robot enters the mat area within the route.

12. The mobile robot of claim 11, wherein the preset condition is one of when the mobile robot arrives at a specific point of interest (POI) within the set route, when an accumulated driving distance of the mobile robot exceeds a threshold distance, when the mobile robot completes a predetermined driving mode, and when a selection signal to add the mat area located near the mobile robot to the route is received.

13. A method for operating a mobile robot that travels using a wheel module including a plurality of drive wheels and a plurality of casters, the method comprising:
recognizing, by a control unit of the mobile robot, that a caster management mode has been started;
detecting a mat area using a sensor of the mobile robot;
allowing the mobile robot to travel to be located on the detected mat area; and
performing motion driving to remove contaminants on the casters while the mobile robot does not depart from the mat area.

14. The method of claim 13, further comprising checking whether the plurality of casters are all in contact with a floor of the mat area, in response to the mobile robot being seated on the mat area,
wherein the performing the motion driving comprises continuously monitoring whether the plurality of casters are located in the mat area during the motion driving, and varying the motion driving based on a result of the monitoring.

15. The method of claim 13, wherein the performing the motion driving is a step of performing at least one of an in-situ rotational motion and a repeated forward and reverse driving motion of the mobile robot in a state that the mobile robot does not depart from the mat area, and
includes providing rotational force to the plurality of drive wheels so that each of the plurality of drive wheels alternately rotates in a forward direction and a reverse direction.

16. The method of claim 13, wherein the performing the motion driving further comprises differently determining specific driving of the motion driving based on information related to the mat area, and
wherein the information includes at least one of shape, size, location, and area ratio of the mat area.

17. The method of claim 13, further comprising:
detecting contaminants on the casters by sensors mounted near the casters; and
generating a signal for starting the caster management mode based on detection results of the sensors.

18. The method of claim 13, further comprising varying an execution time of the motion driving according to the detection results of contaminants through sensors, in the caster management mode.
